# EUROPÄISCHE PATENTANMELDUNG

(11) **EP 1 800 952 A1**
(43) Veröffentlichungstag der Anmeldung: **27.06.2007**
(21) Anmeldenummer: 06127173.0
(22) Anmeldetag: 22.12.2006
(51) Int. Cl.: B60R 5/04

(54) **Hutablage mit Abdeckrollo**

(30) Priorität: 22.12.2005 DE 102005062000
(71) Anmelder: Wagon Automotive FKT GmbH, 85104 Pförring (DE)
(72) Erfinder: Feigl, Claus-Michael, 85005 Ingolstadt (DE)
(74) Vertreter: Bioret, Ludovic

(57) **Zusammenfassung**

Eine Abdeckung (1) für einen Laderaum eines Kraftfahrzeuges ist zwischen einer Rücksitzlehne (2) und einer Heckklappe (3) des Kraftfahrzeuges anordenbar und mit dem Öffnen der Heckklappe (3) um eine Drehachse (4) parallel zur Rücksitzlehne (2) verschwenkbar. Die Abdeckung (1) weist einen formsteifen Rahmen (7) mit einer Aussparung sowie eine Rolloanordnung mit einer auf eine Wickelwelle (9) aufwickelbaren Rollobahn (8) zum Bedecken der Aussparung auf.

## Beschreibung

Die vorliegende Erfindung betrifft eine Abdeckung für einen Laderaum eines Kraftfahrzeuges, welche zwischen einer Rücksitzlehne und einer Heckklappe des Kraftfahrzeuges anordenbar ist. Die Abdeckung ist insbesondere für Fahrzeuge mit Steilheck vorgesehen und ist mit dem Öffnen der Heckklappe um eine Drehachse parallel zur Rücksitzlehne verschwenkbar.

Derartige Abdeckungen sind im Stand der Technik als Hutablagen in Steilheckfahrzeugen bekannt. Diese bestehen üblicherweise aus einem formsteifen Teil, welches im Bereich der Rücksitzlehne in entsprechenden seitlich im Fahrzeug angeordneten Halterungen drehbar aufgenommen ist. Das der Heckklappe zugewandte Ende der Hutablage ist mit Seilen an der Heckklappe befestigt, so dass die Hutablage beim Öffnen der Heckklappe automatisch mit nach oben geschwenkt wird. Hierdurch wird der Zugang zum Laderaum und das Beladen erleichtert. Nachteilig ist bei derartigen Hutablagen jedoch, dass diese nur eine begrenzte Ladehöhe im Laderaum zulassen. Ein Durchladen bei umgeklappter Rücksitzbank wird ebenfalls durch die Drehachse der Hutablage behindert, welche die maximal nutzbare Höhe beschränkt. Zum Transport größerer Güter muss daher die Hutablage, welche ihrerseits ein sperriges Teil ist, ausgebaut und gesondert im Fahrzeug verstaut oder ausserhalb des Fahrzeugs deponiert werden.

Die DE 195 33 806 schlägt eine Laderaumabdeckung für Kombifahrzeuge vor, welche auch beim Transport von sperrigem Ladegut nicht ausgebaut zu werden braucht. Die Abdeckung ist durch ein Rollo realisiert, wobei die Wickelwelle des Rollos an der Heckklappe angeordnet ist und das freie Ende der Rollobahn an den Lehnen der Rücksitze befestigbar ist. Zum Beladen schwenkt die Rollobahn mit der Heckklappe nach oben. Beim Transport sperriger und hoher Güter oder bei umgeklappten Rücksitzen wird das Rollo vollständig auf die Wickelwelle aufgewickelt, so dass der Laderaum in voller Höhe nutzbar ist, das Ladegut jedoch nicht abgedeckt ist.

Aufgabe der vorliegenden Erfindung ist es, eine gattungsgemäße Abdeckung für einen Laderaum dahin gehend zu verbessern, dass bei eingebauter Abdeckung die Lademöglichkeiten verbessert werden.

Die Aufgabe wird gelöst mit den Merkmalen des Anspruchs 1.

Eine Abdeckung für einen Laderaum eines Kraftfahrzeuges ist zwischen einer Rücksitzlehne und einer Heckklappe des Kraftfahrzeuges anordenbar. Mit dem Öffnen der Heckklappe ist die Abdeckung um eine Drehachse parallel zur Rücksitzlehne verschwenkbar. Die Abdeckung ist insbesondere als Hutablage für Fahrzeuge mit Steilheck vorgesehen. Erfindungsgemäß weist die Abdeckung einen formsteifen Rahmen mit einer Aussparung sowie eine Rolloanordnung mit einer auf eine Wickelwelle aufwickelbaren Rollobahn zum Bedecken der Aussparung auf. Durch die erfindungsgemäße Ausgestaltung einer derartigen Abdeckung wird ein formstabiles Teil mit der Funktionalität einer herkömmlichen Hutablage ermöglicht. Da die Abdeckung beim Öffnen der Hecklappe automatisch nach oben schwenkt, wird das Beladen erleichtert. Bei ausgezogener Rollobahn ist der Laderaum vollständig abgedeckt und das Ladegut vor Einblicken von außen geschützt. Zum Transport sehr hoher oder sperriger Güter kann die Rollobahn auf die Wickelwelle aufgewickelt werden, so dass die Aussparung der Abdeckung freigegeben wird. Ein Ausbau der Abdeckung ist hierzu nicht nötig.

Ist der formsteife Rahmen der Abdeckung im wesentlichen U-förmig ausgebildet, kann die Aussparung großzügig gestaltet werden und die Lademöglichkeiten hierdurch verbessert werden. Die Abdeckung weist dennoch eine hohe Stabilität auf. Insbesondere ist es vorteilhaft, wenn hierbei die offene Seite des U-förmigen Rahmens zur Rücksitzlehne weist und die Wickelwelle der Rolloanordnung an der geschlossenen Seite des Rahmens angeordnet ist. Ist die Rollobahn auf die Wickelwelle aufgewickelt und die Heckklappe geöffnet, wird zum Beladen der Raum zu den Rücksitzen hin freigegeben. Dies ermöglicht das bequeme Einladen auch sperriger Güter. Bei umgeklappten Rücksitzlehnen sind die Durchlademöglichkeiten nicht durch die Drehachse der Hutablage oder die Wickelwelle behindert.

Gemäß einer weiteren Ausführungsform der Erfindung ist es vorteilhaft, wenn die Rollobahn über ein Auszugsprofil in den seitlichen Schenkeln des U-förmigen Rahmens geführt ist. Die Rollobahn ist hierdurch in einer definierten Lage ausrollbar.

Weiterhin ist es vorteilhaft, wenn das Auszugsprofil der Rollobahn in mehreren Stellungen in den seitlichen Schenkeln arretierbar ist. Hierdurch ist auch eine nur teilweise Abdeckung des Laderaumes möglich, wenn ein Ladegut transportiert wird, das über die Ebene der seitlichen Führungen hinaus ragt.

Ebenfalls ist es vorteilhaft, wenn die Rollobahn in den seitlichen Schenkeln nach unten abgestützt wird, nach oben jedoch frei beweglich ist. Da die Rollobahn im Vergleich zu einer herkömmlichen Hutablage flexibel ist, können dennoch auch höhere Güter geladen werden, wobei sich die Rollobahn der Kontur des Ladegutes anpasst. Hierdurch kann ein Ladegut, welches bis über die seitlichen Schenkel in der Höhe hinausragt, dennoch vorteilhaft durch die Rollobahn abgedeckt werden.

Eine weitere Ausführungsform der Erfindung ist dadurch gekennzeichnet, dass die seitlichen Schenkel des U-förmigen Rahmens einklappbar an einem Endbord des Rahmens angeordnet sind. Durch das Einklappen der seitlichen Schenkel an das Endbord kann die erfindungsgemäße Hutablage auf eine kompakte Größe zusammengeklappt und besonders günstig in dem Fahrzeug verstaut werden. Vorzugsweise weist das Endbord des Rahmens Arretiereinrichtungen für die ausgeklappte und/oder die eingeklappte Position der seitlichen Schenkel auf. Die seitlichen Schenkel sind dann in jeder der Positionen sicher fixiert.

Eine andere vorteilhafte Weiterbildung der Erfindung sieht vor, dass das Endbord mit den eingeklappten Schenkeln bei Nichtgebrauch in einer Halterung des Kraftfahrzeuges fixierbar ist. Eine derartige Halterung kann ebenfalls im Laderaum oder an den Rücksitzlehnen angebracht sein und ermöglicht ein einfaches Verstauen der Hutablage.

Eine andere Weiterbildung der Erfindung sieht vor, dass die Rolloanordnung elektrisch betätigbar ist. Hierdurch kann das Rollo beispielsweise auch vom Fahrersitz aus betätigt werden.

Weiterhin ist es vorteilhaft, wenn die Abdeckung zusätzlich ein Heckscheibenrollo aufweist. Das Heckscheibenrollo kann vorteilhaft zusammen mit der Abdeckung in einem Bauteil integriert werden.

Weitere Vorteile werden anhand der nachfolgend ausgeführten Ausführungsbeispiele beschrieben.
- **Figur 1**: Eine schematische Schnittdarstellung einer erfindungsgemäßen Abdeckung für einen Laderaum eines Kraftfahrzeuges,
- **Figur 2**: eine Heckansicht der erfindungsgemäßen Abdeckung in eingebautem Zustand mit vollständig eingezogenem Rollo,
- **Figur 3**: eine schematische Darstellung einer erfindungsgemäßen Abdeckung mit einklappbaren seitlichen Schenkeln sowie einem zusätzlichen Heckscheibenrollo,
- **Figur 4**: eine Darstellung der erfindungsgemäßen Abdeckung mit eingeklappten seitlichen Schenkeln, und
- **Figur 5 und 6**: eine erfindungsgemäße Abdeckung mit Anpassung an verschiedene Ladegüter.

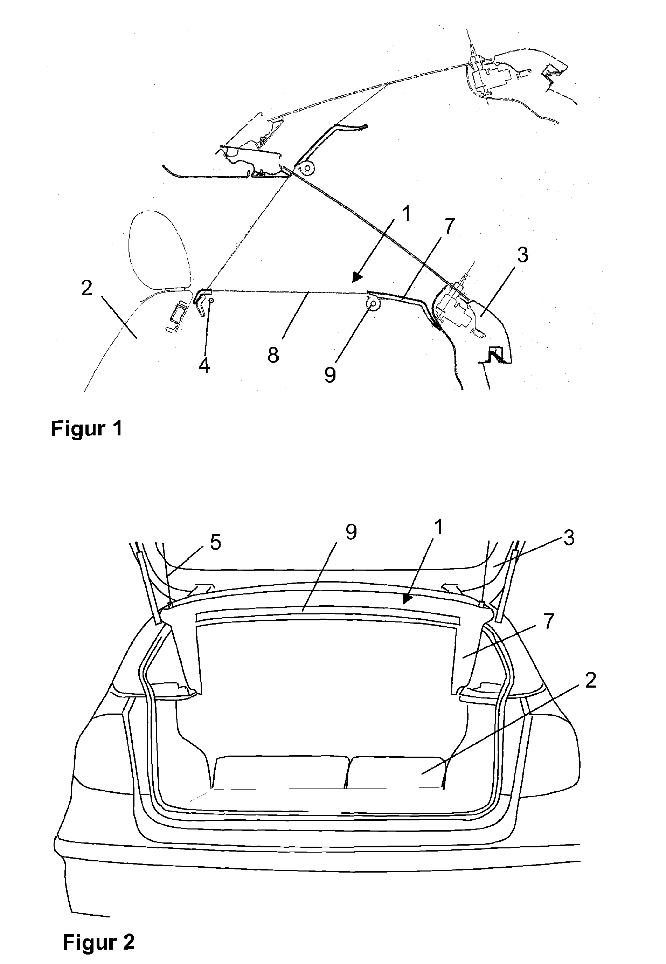

Figur 1 zeigt die erfindungsgemäße Abdeckung 1 in einer schematischen Schnittdarstellung. Die Abdeckung 1 ist in einem Fahrzeug mit Steilheck zwischen einer Rücksitzlehne 2 und einer Heckklappe 3 anordenbar, und mit dem Öffnen der Heckklappe 3 um eine Drehachse 4 parallel zu der Rücksitzlehne 2 verschwenkbar, wie durch die gestrichelte Darstellung angedeutet. An ihrem heckseitigen Ende ist die Abdeckung 1 durch Seile 5 mit der Heckklappe 3 verbunden, wie in Figur 2 dargestellt.

Erfindungsgemäß weist die Abdeckung 1 einen formsteifen Rahmen 7 mit einer Aussparung auf, welche durch eine Rollobahn 8 bedeckt werden kann. Die Wickelwelle 9 der Rollobahn 8 ist hierbei an dem formsteifen Rahmen 7 angeordnet.

Figur 2 zeigt eine Heckansicht einer erfindungsgemäßen Abdeckung 1 in eingebautem Zustand mit vollständig eingezogener Rollobahn 8, welche hier nicht dargestellt ist. Die erfindungsgemäße Abdeckung 1 weist gemäß der vorliegenden Darstellung eine weitgehend rechteckige Ausnehmung auf, so dass der formsteife Rahmen 7 der Abdeckung im Wesentlichen U-förmig ausgebildet ist. Die offene Seite des U-förmigen Rahmens 7 weist hierbei zur Rücksitzlehne 2. Die Rücksitzlehnen 2 sind in der vorliegenden Darstellung umgeklappt, so dass der Laderaum des Kraftfahrzeuges vollständig nutzbar ist. Die Wickelwelle 9 ist hierbei an der heckseitigen, geschlossenen Seite des U-förmigen Rahmens 7 angeordnet, so dass bei umgeklappter Rücksitzlehne 2 der Laderaum nahezu vollständig zugänglich ist und nicht durch eine durchgehende Achse wie bei einer Hutablage des Standes der Technik behindert ist. Der Laderaum kann hierdurch in nahezu vollständiger Höhe genutzt werden, ohne dass ein Ausbau der Hutablage bzw. der erfindungsgemäßen Abdeckung 1 erforderlich wäre. Um derartige Durchlademöglichkeiten zu erreichen, ist es lediglich erforderlich, die Rollobahn 8 vollständig auf die Wickelwelle 9 aufzuwickeln.

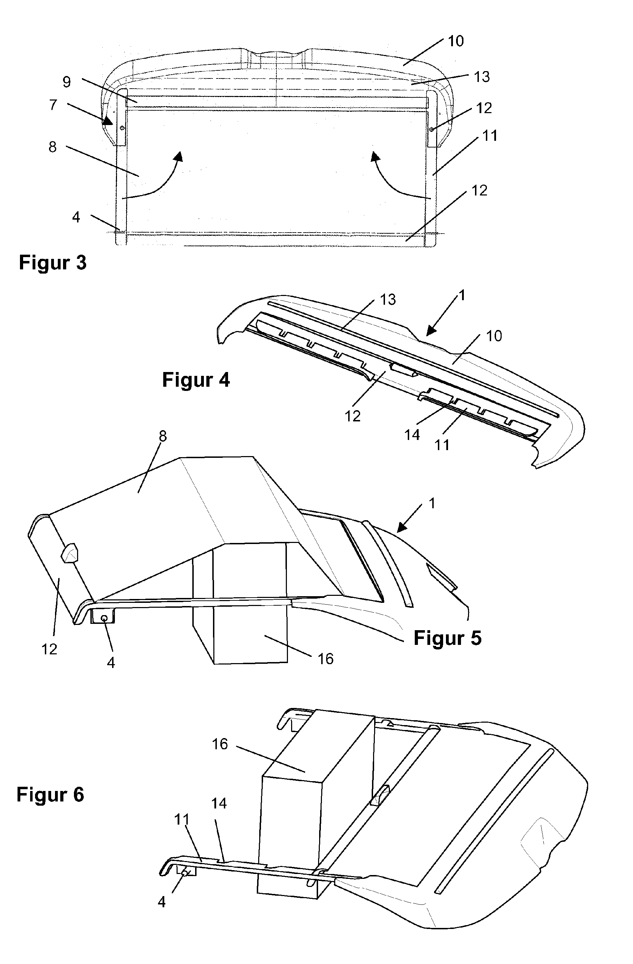

Figur 3 zeigt eine schematische Darstellung der erfindungsgemäßen Abdeckung 1 in einer Draufsicht. Die Abdeckung weist einen formsteifen Rahmen 7 auf, welcher vorliegend durch ein Endbord 10 der Hutablage gebildet wird, an welchem seitliche Schenkel 11 um einen Drehpunkt 12 schwenkbar angeordnet sind. In Gebrauchsstellung werden die seitlichen Schenkel 11, die als Führungen für das Auszugsprofil 12 sowie für die Rollobahn 8 dienen, ausgeklappt, wie in Figur 3 dargestellt. Die seitlichen Schenkel 11 können beispielsweise durch Clips oder Rasten, welche an dem Endbord 10 angeordnet sind, in Position zu diesem gehalten werden.

An dem Endbord 10 ist weiterhin die Wickelwelle 9 für die Rollobahn 8 angeordnet. In gestrichelter Darstellung ist ein weiterer Rollokörper 13 für ein ebenfalls in das Endbord 10 integriertes Heckscheibenrollo dargestellt. Am frontseitigen Ende der seitlichen Schenkel 11 kann die erfindungsgemäße Abdeckung 1 in entsprechenden Aufnahmen des Fahrzeuges angebracht werden und ist mit dem Öffnen der Heckklappe um die Drehachse 4 verschwenkbar.

Bei Nichtgebrauch können die seitlichen Schenkel 11, wie durch die Pfeile angedeutet, um den Drehpunkt 12 verschwenkt werden und an das Endbord 10 der Abdeckung 1 angeklappt werden (Figur 4). Hierdurch wird ein besonders kompaktes Bauteil erhalten, welches sich auf einfache Weise in dem Kraftfahrzeug verstauen lässt, wenn die Abdeckung 1 nicht benötigt wird.

In den seitlichen Schenkeln sind weiterhin mehrere Rastpositionen 14 für das Auszugsprofil 12 der Rollobahn 8 angeordnet, so dass die Rollobahn 8 auch nur teilweise ausgezogen werden kann und in mehreren Positionen in den Schenkeln 11 arretierbar ist, wie in Figur 6 näher dargestellt. Die Rastpositionen 14 und das Auszugsprofil 12 sind derart ausgebildet, dass das Auszugsprofil 12 durch Federkraft sicher in den Rastpositionen gehalten werden kann. Zum Lösen der Arretierung wird das Auszugsprofil kurz in Auszugsrichtung gezogen, wobei es über eine schiefe Ebene aus dem bereich der Rastposition 14 rutscht und durch Federkraft selbsttätig auf die Wickelwelle 9 aufwickelbar ist.

Figur 5 zeigt eine Darstellung der erfindungsgemäßen Abdeckung 1 in Gebrauchsstellung bei einem überhohen Ladegut 16. Erfindungsgemäß sind hierbei die seitlichen Schenkel 11 derart ausgebildet, dass das Auszugsprofil 12 in ihnen geführt wird und die Rollobahn 8 nach unten hin abgestützt wird, so dass sie die Funktion einer Hutablage weiterhin erfüllen kann. Nach oben hin ist die Rollobahn 8 jedoch frei beweglich und ermöglicht dadurch eine Anpassung an das Ladegut 16. Wie dargestellt kann hierbei auch überhohes Ladegut 16 transportiert werden, welches in der Höhe bis über die seitlichen Führungen 11 hinausragt, ohne dass hierzu ein Ausbau der Abdeckung 1 erforderlich wäre.

Figur 6 zeigt eine weitere Anordnung der erfindungsgemäßen Abdeckung 1 bei einem überhohen Ladegut 16. Die seitlichen Schenkel 11 weisen hierzu mehrere Rastpositionen 14 für das Auszugprofil 12 der Rollobahn 8 auf. Hierdurch ist es möglich, den Laderaum auch nur teilweise mit der Rollobahn 8 zu bedecken. In der vorliegenden Darstellung ist die Rollobahn 8 von Hand betätigbar, es ist jedoch ebenso denkbar, einen elektrischen Antrieb für die Rollobahn 8 vorzusehen. Weiterhin können die seitlichen Schenkel 11 mit der Rollobahn 8 auch derart ausgeführt sein, dass die Rollobahn 8 stufenlos betätigbar ist.

Mit der erfindungsgemäßen Abdeckung 1 können wesentlich größere Teile als bei einer Hutablage des Standes der Technik bei umgeklappter Rücksitzlehne 2 durchgeladen werden, ohne Abdeckung 1 entfernen zu müssen. Auch bei überhohem Ladegut 16 muss die erfindungsgemäße Abdeckung 1 nicht ausgebaut werden, da sich der Stoff der Rollobahn 8 dem überstehenden Ladegut 16 anpasst. Ebenso ist eine Anpassung an das Ladegut 16 durch stufenweises Öffnen der Rollobahn 8 möglich.

Die vorliegende Erfindung ist nicht auf die dargestellten Ausführungsbeispiele beschränkt. Abwandlungen im Rahmen der Patentansprüche fallen ebenfalls unter die Erfindung.

## Patentansprüche

1. Abdeckung für einen Laderaum eines Kraftfahrzeuges, insbesondere eines Kraftfahrzeuges mit Steilheck, welche zwischen einer Rücksitzlehne (2) und einer Heckklappe (3) des Kraftfahrzeuges anordenbar ist und mit dem Öffnen der Heckklappe (3) um eine Drehachse parallel zur Rücksitzlehne (2) verschwenkbar ist, **dadurch gekennzeichnet, dass** die Abdeckung (1) einen formsteifen Rahmen (7) mit einer Aussparung sowie eine Rolloanordnung mit einer auf eine Wickelwelle (9) aufwickelbaren Rollobahn (8) zum Bedecken der Aussparung aufweist.

2. Abdeckung nach Anspruch 1, **dadurch gekennzeichnet, dass** der formsteife Rahmen (7) der Abdeckung (1) im wesentlichen U-förmig ausgebildet ist.

3. Abdeckung nach einem der vorhergehenden Ansprüche, **dadurch gekennzeichnet, dass** die offene Seite des U-förmigen Rahmens (7) zur Rücksitzlehne (2) weist.

4. Abdeckung nach einem der vorhergehenden Ansprüche, **dadurch gekennzeichnet, dass** die Wickelwelle (9) der Rolloanordnung an der geschlossenen Seite des Rahmens (7) angeordnet ist.

5. Abdeckung nach einem der vorhergehenden Ansprüche, **dadurch gekennzeichnet, dass** die Rollobahn (8) über ein Auszugsprofil (12) in den seitlichen Schenkeln (11) des U-förmigen Rahmens (7) geführt ist.

6. Abdeckung nach einem der vorhergehenden Ansprüche, **dadurch gekennzeichnet, dass** das Auszugsprofil (12) der Rollobahn (8) in mehreren Stellungen in den seitlichen Schenkeln (11) arretierbar ist.

7. Abdeckung nach einem der vorhergehenden Ansprüche, **dadurch gekennzeichnet, dass** die Rollobahn (8) in den seitlichen Schenkeln (11) nach unten abgestützt wird und nach oben frei beweglich ist.

8. Abdeckung nach einem der vorhergehenden Ansprüche, **dadurch gekennzeichnet, dass** die seitlichen Schenkel (11) des U-förmigen Rahmens (7) einklappbar an einem Endbord (10) des Rahmens (7) angeordnet sind.

9. Abdeckung nach einem der vorhergehenden Ansprüche, **dadurch gekennzeichnet, dass** das Endbord (10) des Rahmens (7) Arretiereinrichtungen für die ausgeklappte und/oder die eingeklappte Position der seitlichen Schenkel (11) aufweist.

10. Abdeckung nach einem der vorhergehenden Ansprüche, **dadurch gekennzeichnet, dass** das Endbord (10) mit den eingeklappten Schenkeln (11) bei Nichtgebrauch in einer Halterung des Kraftfahrzeuges fixierbar ist.

11. Abdeckung nach einem der vorhergehenden Ansprüche, **dadurch gekennzeichnet, dass** die Rolloanordnung elektrisch betätigbar ist.

12. Abdeckung nach einem der vorhergehenden Ansprüche, **dadurch gekennzeichnet, dass** die Abdeckung (1) zusätzlich ein Heckscheibenrollo aufweist.
